Europäisches Patentamt

European Patent Office

Office européen des brevets

(19)

(11) Veröffentlichungsnummer: **0 045 296**
**B1**

(12) **EUROPÄISCHE PATENTSCHRIFT**

(45) Veröffentlichungstag der Patentschrift:
**11.07.84**

(51) Int. Cl.³: **A 01 G 9/14**

(21) Anmeldenummer: **81890118.3**

(22) Anmeldetag: **15.07.81**

(54) **Gewächshaus.**

(30) Priorität: **28.07.80 AT 3910/80**

(73) Patentinhaber: **VOEST-ALPINE Aktiengesellschaft, Werksgelände, A-4010 Linz (AT)**

(43) Veröffentlichungstag der Anmeldung:
**03.02.82 Patentblatt 82/5**

(72) Erfinder: **Die Erfinder haben auf ihre Nennung verzichtet**

(45) Bekanntmachung des Hinweises auf die Patenterteilung:
**11.07.84 Patentblatt 84/28**

(74) Vertreter: **Wolfram, Gustav, Dipl.-Ing., Schwindgasse 7 P.O. Box 205, A-1041 Wien (AT)**

(84) Benannte Vertragsstaaten:
**CH DE FR GB LI NL SE**

(56) Entgegenhaltungen:
**AT - B - 316 912**

## Beschreibung

Die Erfindung betrifft ein Gewächshaus mit einem käfigartigen Stützgerüst, in dem ein endloses über obere und untere Umlenkrollen geführtes Umlaufband zur Aufnahme von sich entwickelnden Organismen vorgesehen ist.

An Gewächshäuser dieser Art werden eine Vielzahl von Anforderungen gestellt: Sie sollen einfach in der Herstellung, leicht zu montieren sein und keine grossen Fundamentierungsarbeiten erfordern und sie sollen sich einfach auf einem verfestigten Boden aufstellen lassen, jedoch bei Setzungen des Bodens voll funktionsfähig bleiben. Eine weitere Forderung besteht darin, dass der Raum innerhalb des Gewächshauses bestmöglichst ausgenutzt wird, d.h. möglichst wenig zu klimatisierenden — und damit Energie verbrauchenden — Totraum aufweist.

Ein Gewächshaus der eingangs beschriebenen Art ist aus der AT-B Nr. 298869 bekannt. Bei diesem bekannten Gewächshaus trägt jede Stütze des Hauses ein eigenes, über Umlenkrollen geführtes Umlaufband, wodurch eine Vielzahl von nebeneinander angeordneten Umlaufbändern vorhanden ist. Durch die Anordnung der einzelnen Umlaufbänder jeweils an einer eigenen Stütze spielen Bodensetzungen keine besondere Rolle. Wenn sich eine der Stützen senkt, so senkt sich das an ihr angeordnete Umlaufband, was die benachbarten Umlaufbänder nicht beeinflusst. Die Anordnung einer Vielzahl von nebeneinander angeordneten Umlaufbändern hat jedoch den Nachteil, dass sehr viel Platz zwischen den Umlaufbändern für das Bedienungspersonal erforderlich ist, welcher Platz ein unverhältnismässig grosses und daher aufwendiges Gewächshaus bedingt, und ausserdem energieverbrauchenden Totraum darstellt. Ausserdem benötigt man für jedes der Umlaufbänder einen eigenen Antrieb, was ebenfalls aufwendig ist.

Die Erfindung bezweckt die Vermeidung dieser Nachteile und Schwierigkeiten und stellt sich die Aufgabe, ein Gewächshaus der eingangs beschriebenen Art zu schaffen, welches besonders leicht gebaut und ohne aufwendige Fundamentierungsarbeiten errichtet werden kann, wobei jedoch Totraum innerhalb des Gewächshauses möglichst vermieden wird, d.h. das Gewächshaus soll in seinen Abmessungen möglichst klein gehalten werden können, wodurch Energieeinsparungen gegenüber bekannten Gewächshäusern möglich sein sollen.

Diese Aufgabe wird erfindungsgemäss dadurch gelöst, dass die Umlenkrollen an sich über die gesamte Länge des Gewächshauses erstreckenden Längsträgern angeordnet sind, die am Stützgerüst so abgestützt sind, dass Relativbewegungen der Längsträger gegenüber dem Stützgerüst möglich sind. Das erfindungsgemässe Gewächshaus ermöglicht es trotz Anordnung eines sich über die gesamte Länge des Gewächshauses erstreckenden Umlaufbandes (wodurch sich bei optimaler Raumausnutzung Toträume vermeiden lassen), auf Fundamentierungen zu verzichten, da Verformungen und Verlagerungen des käfigartigen Stützgerüstes zwar die Lage der Längsträger verändern können, jedoch ohne Einfluss sind auf das an den Längsträgern montierte Transportsystem für die Organismen. Das käfigartige Stützgerüst kann beim erfindungegemässen Gewächshaus als besonders leichte Stahlkonstruktion ausgeführt sein.

Nach einer bevorzugten Ausführungsform liegen an dem käfigartigen Stützgerüst die die oberen Umlenkrollen tragenden Längsträger lose auf und sind die die unteren Umlenkrollen tragenden Längsträger am Stützgerüst in vertikaler Richtung verschieb- oder verschwenkbar gelagert, was die Vorteile eines minimalen Bauaufwandes mit einfachster Montage verbindet. Die in vertikaler Richtung verschieb- bzw. verschwenkbar gelagerten Längsträger ermöglichen, das Umlaufband stets in gespanntem Zustand unabhängig von Verformungen des Stützgerüstes (z.B. infolge Bodensetzungen) zu halten. Da durch die am Stützgerüst verschieb- oder verschwenkbar gelagerten Längsträger eine Mehrzahl von Rollen bewegt wird, kann das Spannen des Umlaufbandes mit sehr geringem Hub, d.h. mit geringer vertikaler Beweglichkeit der Längsträger erfolgen.

Vorteilhaft sind die die unteren Umlenkrollen tragenden Längsträger mit jeweils einem Ende am Stützgerüst angelenkt und mit ihrem anderen Ende gegenüber dem Stützgerüst in vertikaler Richtung abgefedert, wobei zweckmässig die schwenkbaren Enden der die unteren Umlenkrollen tragenden Längsträger jeweils mittels einer Schraubenfeder, Tellerfeder oder anderen Federn an einer am Stützgerüst angeordneten Konsole abgestützt sind.

Die die oberen Umlenkrollen tragenden Längsträger sind zweckmässig gegen seitliches, d.h. quer zur Längsrichtung des Gewächshauses gerichtetes Verschieben mittels Verbindungselementen gesichert.

Gemäss einer bevorzugten Variante sind die oberen und unteren Umlenkrollen jeweils an vertikal gerichteten, an den Längsträgern befestigten, vorzugsweise mittels einer Klemmverbindung festklemmbaren, Armen drehbar gelagert, wobei die die oberen Umlenkrollen tragenden Arme vertikal nach unten und die die unteren Umlenkrollen tragenden Arme vertikal nach oben gerichtet sind, was den Vorteil bietet, dass die durch das Umlaufband gegeneinander gespannten Umlenkrollen stets eine den von dem Umlaufband auf sie wirkenden Kräften entsprechend günstige Lage einnehmen, wodurch die Reibung und somit der Verschleiss zwischen den Rollen und dem Umlaufband möglichst gering gehalten ist. Man kommt daher mit geringen Antriebsleistungen für das Umlaufband aus, und selbst bei grösseren Verformungen des Stützgerüstes kann es zu keinem Klemmen des Umlaufbandes kommen.

Eine weitere bevorzugte Ausführungsform ist dadurch gekennzeichnet, dass zwischen den oberen und unteren Umlenkrollen weitere Umlenkrollen angeordnet sind, die an den die oberen Umlenkrollen tragenden Längsträgern befestigt sind, womit das Umlaufband im oberen Teil des Gewächshauses unter meanderartiger Umlenkung in Längsrichtung des Gewächshauses weiterbewegbar und im unteren Teil des Gewächshauses ebenfalls unter meanderförmiger Umlenkung in die entgegengesetzte Richtung weiterbewegbar ist. Durch diese doppelte meanderartige Hin- und Herführung des Umlaufbandes lässt sich eine hohe Beanspruchung des Umlaufbandes und der Lager der Umlenkrollen vermeiden, wie sie z.B. bei einer Konstruktion eines Gewächshauses gemäss der AT-B Nr. 254595 auftritt. Bei dieser bekannten Konstruktion wird das Umlaufband horizontal von einem Ende des Gewächshauses zum anderen rückgeführt. Der durch diese horizontale Rückführung bedingte Durchhang des Umlaufbandes bedingt nicht nur eine grosse Belastung für das Band, sondern erfordert auch eine erhöhte Antriebsleistung.

Zweckmässig sind jeweils zwei der weiteren Umlenkrollen an einem gemeinsamen, die Lager dieser Umlenkrollen verbindenden Träger drehbar gelagert, wobei der Träger mittels eines Zugkräfte aufnehmenden Verbindungsmittels, wie einer Zugstange, an dem die oberen Umlenkrollen tragenden Längsträger befestigt ist. Dies bietet den Vorteil, dass sich die Kräfte der beiden übereinanderliegenden an dem gemeinsamen Träger gelagerten Umlenkrollen gegenseitig aufheben und nur eine geringe, etwa dem Eigengewicht der Rollen und der Träger entsprechende, vertikal nach unten gerichtete Restkraft überbleibt. Dadurch werden die die Umlenkrollen tragenden Längsträger nur sehr gering belastet, und man kommt mit geringen Dimensionen für diese Längsträger aus.

R: BE8 J: 16-2 FBC195b  45296

Das Stützgerüst ist vorteilhaft aus hintereinander angeordneten, U-förmigen, nach unten zu offenen Toren gebildet, wobei die Ebene der Tore quer zur Längsrichtung des Gewächshauses gerichtet ist, und wobei mindestens zwei dieser Tore miteinander durch einen freien Windverband verbunden sind, und die die oberen Umlenkrollen aufweisenden Längsträger an den oberen Enden der Tore aufgelagert und die die unteren Umlenkrollen tragenden Längsträger an den unteren Enden der Tore vorgesehen sind, wodurch sich das Stützgerüst in beliebiger Länge nach einem Baukastensystem bilden lässt, wobei wiederum Setzungen einzelner Tore ohne Belang sind für den mechanischen, das Transportsystem betreffenden Teil des Gewächshauses. Die einfache Montage des Gewächshauses kann auch durch ungeschulte Kräfte vorgenommen werden.

Um auch für das Antriebsaggregat des Umlaufbandes kein eigenes Fundament schaffen zu müssen, ist das Antriebsaggregat zweckmässig an einem der Längsträger befestigt.

Bevorzugt sind die U-förmigen Tore zusätzlich zum Windverband mit sich in Längsrichtung des Gewächshauses erstreckenden Leisten verbunden, wobei die Leisten an den Toren mittels eine Relativbewegung zwischen Toren und Leisten zulassenden Verbindungsmittel befestigt sind. An diesen sich in Längsrichtung erstreckenden Leisten kann die Befestigung von Isolierplatten vorgenommen werden, wobei die Isolierplatten bei Verlagerungen des Stützgerüstes unbehelligt bleiben.

Die Aufhängung der Umlenkrollen ist zweckmässig in der Art und Weise ausgebildet, dass die die Umlenkrollen tragenden Arme seitlich an den Längsträgern befestigt sind und die Lager der Umlenkrollen in Richtung der seitlichen Anordnung der Längsträger auskragen, so dass sich die Rollen genau vertikal unter den Längsträgern befinden.

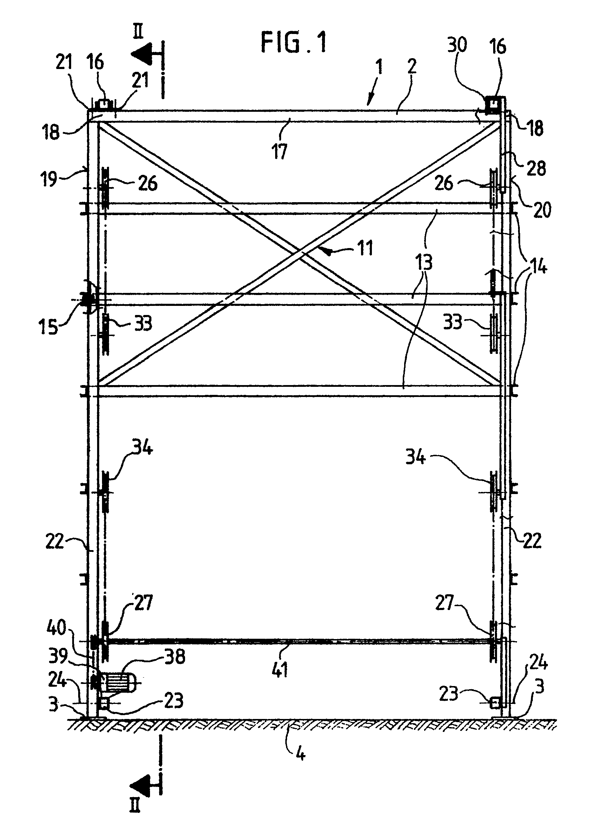

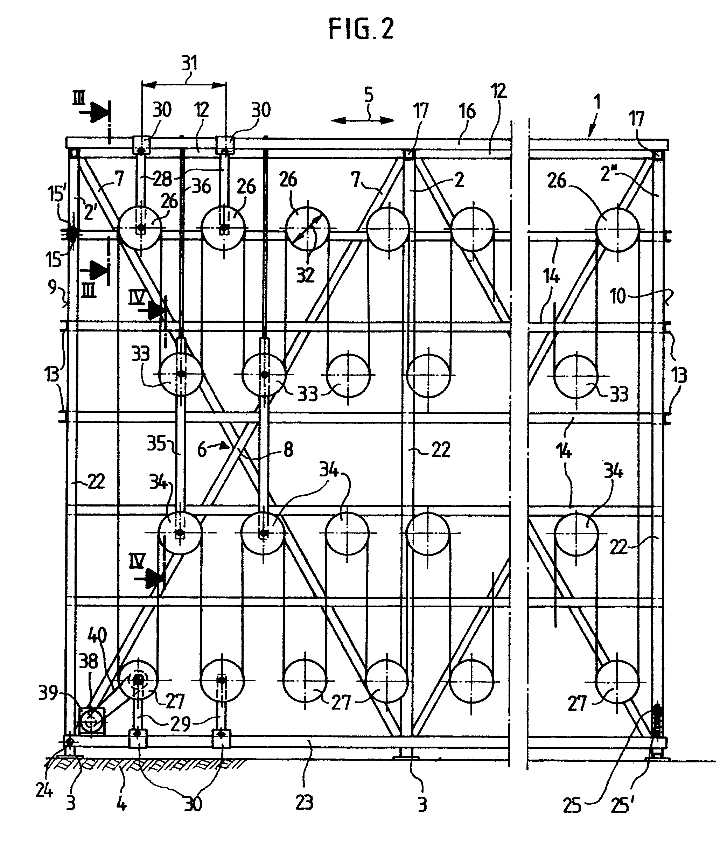

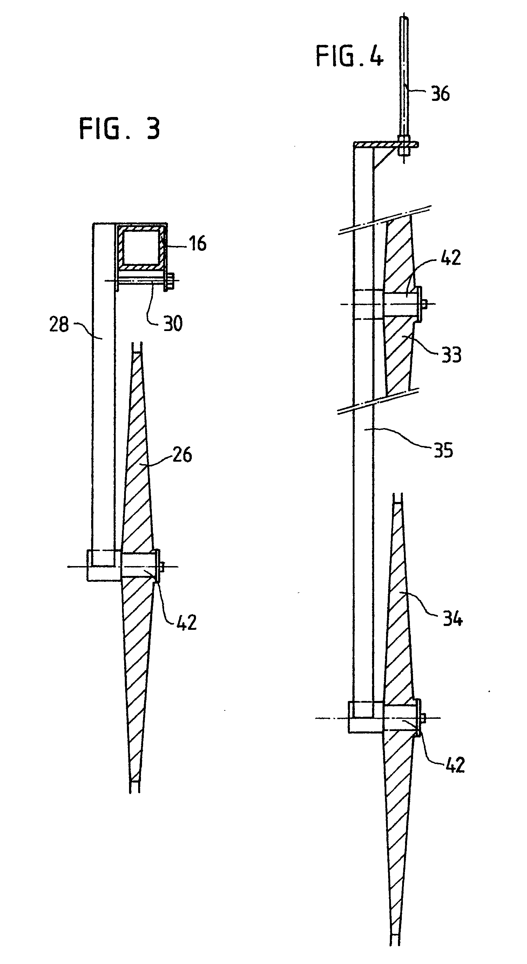

Die Erfindung ist anhand der Zeichnung näher erläutert, wobei Fig. 1 eine Stirnansicht teilweise im Schnitt und Fig. 2 eine Schnittdarstellung des Gewächshauses gemäss einem längs der Linie II-II der Fig. 1 geführten Schnitt zeigen. Die Fig. 3 und 4 veranschaulichen Details in vergrössertem Massstab in nach den Linien III-III bzw. IV-IV der Fig. 2 geführten Schnitten.

Das käfigartige Stützgerüst 1 des Gewächshauses ist aus hintereinander angeordneten U-förmigen nach unten zu offenen Toren 2, 2', 2'' gebildet. Diese Tore bestehen aus knickfesten, geschlossenen Vierkantprofilen, die durch Schweissung verbunden sind. Die unteren Enden der Tore tragen Fussplatten 3, mit denen die Tore 2, 2', 2'' auf dem verfestigten Erdboden 4 aufruhen. Die Ebene der Tore erstreckt sich jeweils quer zur Längsrichtung 5 des Gewächshauses. Mindestens zwei hintereinander angeordnete Tore 2, 2', 2'' sind miteinander durch einen freien Windverband 6 verbunden. Bei diesem Windverband sind die beiden Streben 7 an ihrem Kreuzungspunkt 8 nicht miteinander verbunden. Dadurch wird eine standfeste Konstruktion sichergestellt, die Setzungen einzelner Tore zulässt.

Die an den Stirnseiten 9, 10 des Gewächshauses angeordneten Tore 2', 2'' sind quer zur Längsrichtung 5 durch einen konventionellen Windverband 11 versteift. Die horizontal angeordnete Dachverstrebung 12 ist ebenfalls konventionell. In Längs- und Querrichtung sind an den Aussenseiten des Gewächshauses Profilleisten 13, 14 montiert, an denen nicht dargestellte, welche, beispielsweise innen verspiegelte, Isolierplatten montiert werden können.

Die sich in Längsrichtung 5 erstreckenden Profilleisten 14 sind mit den einzelnen Toren 2, 2', 2'' derart verbunden, dass geringe Bewegungen dieser Längsleisten zu den Toren möglich sind. Dies kann beispielsweise durch sich in horizontaler oder vertikaler Richtung erstreckende, die Profilleisten bzw. Tore durchsetzende Langlöcher 15, die von Schrauben 15' durchsetzt werden, bewerkstelligt sein. Es könnten jedoch auch elastische Verbindungsmittel, beispielsweise aus Gummi, zwischen den Profilleisten 14 und den Toren 2, 2', 2'' vorgesehen sein.

An der Oberseite dieses käfigartigen Stützgerüstes 1 sind zwei sich über die gesamte Länge des Gewächshauses erstreckende Längsträger 16 aufgelagert. Diese Längsträger liegen auf den oberen horizontalen Teilen 17 der Tore 2, 2', 2'' lose auf, und zwar verbindet einer dieser Längsträger 16 die Ecken 18 der Tore an einer Längsseitenwand 19 und der andere Längsträger die Eckpunkte 18 an der gegenüberliegenden Längsseitenwand 20. Die Längsträger 16 sind lediglich durch Laschen 21 gegen Verschieben in Querrichtung und damit gegen Herabfallen von dem Stützgerüst 1 gesichert.

An den unteren Enden der vertikalen Streben 22 der Tore sind zwei weitere Längsträger 23 vorgesehen, von denen einer an der einen Längsseitenwand 19 und der andere an der gegenüberliegenden Längsseitenwand 20 liegt. Jeder dieser Längsträger 23 ist mit einem Gelenk 24 am ersten stirnseitigen Tor 2' angelenkt und mit dem hinteren Ende am letzten stirnseitigen Tor 2'' des Gewächshauses gegenüber einer am unteren Ende der Streben 22 dieses Tores befestigten Konsole 25 mittels einer Schraubenfeder 25' federnd nach unten gepresst. Die Wirkung der Federn 25' wird durch das Eigengewicht der Längsträger 23 und unteren Umlenkrollen unterstützt. Eine Verbindung dieser Längsträger mit den zwischen den stirnseitigen Toren 2', 2'' angeordneten Toren 2 ist nicht vorgesehen, so dass diese Längsträger um die Gelenke 24 verschwenkbar sind.

An den Längsträgern 16 und 23 sind jeweils Umlenkrollen 26, 27 für ein meanderartig geführtes Umlaufband zur Aufnahme von sich entwickelnden Organismen, wie Pflanzen, angeordnet und zwar sind die Umlenkrollen 26, 27 jeweils an Armen 28, 29, die an den Längsträgern mittels Klemmverbindungen 30 festklemmbar sind, drehbar gelagert, wobei obere Umlenkrollen 26 an von den oberen Längsträgern 16 nach unten gerichteten und die diesen gegenüberliegenden unteren Umlenkrollen 27 an von den unten angeordneten Längsträgern 23 nach oben ragenden Zugarmen 28, 29 drehbar gelagert sind.

Zwischen diesen etwa im Abstand 31 von zwei Durchmessern 32 der Umlenkrollen 26, 27 montierten Zugarmen sind jeweils zwei weitere Umlenkrollen 33, 34 angeordnet, die an einem gemeinsamen Träger 35, der an den oberen Längsträgern 16 mittels einer Schraubverbindung über eine Zugstange 36 aufgehängt ist, vorgesehen sind. Diese weiteren Umlenkrollen 33, 34 liegen nicht nur in Längsrichtung 5, sondern auch in vertikaler Richtung zwischen den oberen und unteren Umlenkrollen 26, 27.

Das Umlaufband 37 ist um die Umlenkrollen in der Art und Weise geführt, dass es im oberen Teil des Gewächshauses, wie aus Fig. 1 ersichtlich, in einer Längsrichtung des Gewächshauses unter meanderartiger Umlenkung über die Rollen 26, 33 geführt ist, sodann an einer Stirnseite nach unten zu einer unteren Umlenkrolle 27 gelangt und von dort im unteren Teil des Gewächshauses unter meanderförmiger Umlenkung über die Rollen 27 und 34 wieder zur vorderen Stirnseite geführt wird.

Das Umlaufband 37 ist in an sich bekannter Weise (AT-B Nr. 298869) von zwei seitlich über die Umlenkrollen geführten Ketten gebildet, die durch nicht dargestellte horizontale Querträger verbunden sind. An den Querträgern können die die Pflanzen aufnehmenden Gefässe befestigt werden.

An einem unteren Längsträger 23 ist der Antriebsmotor 38 mit einem Getriebe 39 und der Transmissionskette 40 angeordnet. Die Transmissionskette 40 treibt eine untere Umlenkrolle 27, welche zwecks synchronem Antrieb der beiden Ketten mit einer Welle 41 mit der an der gegenüberliegenden Längsseitenwand liegenden korrespondierenden Umlenkrolle 27 verbunden ist.

Durch die federnde Lagerung der unteren Längsträger ist das Umlaufband 37 gespannt, wobei nur sehr geringe vertikale Bewegungen der Längsträger 23 erforderlich sind. (Die unteren Längsträger 23 könnten zu diesem Zweck auch an beiden Enden vertikal geführt und gefedert sein.)

Wie aus den Fig. 3 und 4 ersichtlich ist, weisen die die Umlenkrollen 26, 27 und 33, 34 tragenden Zugarme 28, 29 und Träger 35 nach innen auskragende Lagerzapfen 42 für die Umlenkrollen auf, wodurch sich die Umlenkrollen genau vertikal unter den Längsträgern befinden. Die Umlenkrollen können sich dadurch genau dem Umlaufband anpassen, und Schrägstellungen der Umlenkrollen werden vermieden.

Der Vorteil des erfindungsgemässen Gewächshauses besteht darin, dass es aus zwei Teilen besteht, und zwar einerseits aus dem käfigartigen Stützgerüst 1, welches in Leichtbauweise konzipiert ist und welches sich auch Bodensetzungen sehr gut anpasst, und anderseits aus dem innerhalb des Stützgerüstes vorgesehenen, den mechanischen Teil der Anlage umfassenden Komplex, der aus den gegenüber dem Stützgerüst Relativbewegungen zulassenden Längsträgern gebildet ist. Der mechanische Teil ist durch diese Bauweise weitgehendst unbeeinflusst von durch Bodensetzungen bedingten Veränderungen des käfigartigen Stützgerüstes. Die bewegliche Anordnung der Längsträger am Stützgerüst bewirkt weiters die genaue Ausrichtung der einander gegenüberliegenden Umlenkrollen zueinander, so dass das Umlaufband ohne Zwängungen geführt ist.

**Patentansprüche**

1. Gewächshaus mit einem käfigartigen Stützgerüst (1), in dem ein endloses über obere und untere Umlenkrollen (26, 27) geführtes Umlaufband (37) zur Aufnahme von sich entwickelnden Organismen vorgesehen ist, dadurch gekennzeichnet, dass die Umlenkrollen (26, 27) an sich über die gesamte Länge des Gewächshauses erstreckenden Längsträgern (16, 23) angeordnet sind, die am Stützgerüst (1) so abgestützt sind, dass Relativbewegungen der Längsträger (16, 23) gegenüber dem Stützgerüst (1) möglich sind.

2. Gewächshaus nach Anspruch 1, dadurch gekennzeichnet, dass an dem käfigartigen Stützgerüst (1) die die oberen Umlenkrollen (26) tragenden Längsträger (16) lose aufliegen, und die die unteren Umlenkrollen (27) tragenden Längsträger (23) am Stützgerüst (1) in vertikaler Richtung verschieb- oder verschwenkbar gelagert sind.

3. Gewächshaus nach einem der beiden Ansprüche 1 oder 2, dadurch gekennzeichnet, dass die die unteren Umlenkrollen (27) tragenden Längsträger (23) mit jeweils einem Ende am Stützgerüst (1) angelenkt und mit ihrem anderen Ende gegenüber dem Stützgerüst in vertikaler Richtung abgefedert sind.

4. Gewächshaus nach Anspruch 3, dadurch gekennzeichnet, dass die schwenkbaren Enden der die unteren Umlenkrollen tragenden Längsträger jeweils mittels einer Feder (25') an einer am Stützgerüst (1) angeordneten Konsole (25) abgestützt sind.

5. Gewächshaus nach den Ansprüchen 1 bis 4, dadurch gekennzeichnet, dass die die oberen Umlenkrollen (26) tragenden Längsträger (16) gegen seitliches, d.h. quer zur Längsrichtung des Gewächshauses gerichtetes Verschieben mittels Verbindungselementen (21) gesichert sind.

6. Gewächshaus nach den Ansprüchen 1 bis 5, dadurch gekennzeichnet, dass die oberen und unteren Umlenkrollen (26, 27) jeweils an vertikal gerichteten, an den Längsträgern (16, 23) befestigten, vorzugsweise mittels einer Klemmverbindung (21) festklemmbaren, Armen (28, 29) drehbar gelagert sind, wobei die die oberen Umlenkrollen (26) tragenden Arme (28) vertikal nach unten und die die unteren Umlenkrollen (27) tragenden Arme (29) vertikal nach oben gerichtet sind.

7. Gewächshaus nach den Ansprüchen 1 bis 6, dadurch gekennzeichnet, dass zwischen den oberen und unteren Umlenkrollen (26, 27) weitere Umlenkrollen (33, 34) angeordnet sind, die an den die oberen Umlenkrollen (26) tragenden Längsträgern (16) befestigt sind, womit das Umlaufband (37) im oberen Teil des Gewächshauses unter meanderartiger Umlenkung in Längsrichtung (5) des Gewächshauses weiterbewegbar und im unteren Teil des Gewächshauses ebenfalls unter meanderförmiger Umlenkung in die entgegengesetzte Richtung weiterbewegbar ist.

8. Gewächshaus nach Anspruch 7, dadurch gekennzeichnet, dass jeweils zwei der weiteren Umlenkrollen (33, 34) an einem gemeinsamen, die Lager dieser Umlenkrollen verbindenden Träger (35) drehbar gelagert sind, wobei der Träger (35) mittels eines Zugkräfte aufnehmenden Verbindungsmittels (36), wie einer Zugstange, an dem die oberen Umlenkrollen (26) tragenden Längsträger (16) befestigt ist.

9. Gewächshaus nach den Ansprüchen 1 bis 8, dadurch gekennzeichnet, dass das Stützgerüst (1) aus hintereinander angeordneten, U-förmigen, nach unten zu offenen Toren (2, 2', 2'') gebildet ist, wobei die Ebene der Tore (2, 2', 2'') quer zur Längsrichtung (5) des Gewächshauses gerichtet ist, und wobei mindestens zwei dieser Tore (2', 2) miteinander durch einen freien Windverband (6) verbunden sind, und die die oberen Umlenkrollen (26) aufweisenden Längsträger (16) an den oberen Enden der Tore (2, 2', 2'') aufgelagert und die die unteren Umlenkrollen (27) tragenden Längsträger (23) an den unteren Enden der Tore vorgesehen sind.

10. Gewächshaus nach Anspruch 9, dadurch gekennzeichnet, dass die U-förmigen Tore (2, 2', 2'') zusätzlich zum Windverband (6) mit sich in Längsrichtung (5) des Gewächshauses erstreckenden Leisten (14) verbunden sind, wobei die Leisten an den Toren mittels eine Relativbewegung zwischen Toren und Leisten zulassenden Verbindungsmittel (15) befestigt sind.

11. Gewächshaus nach den Ansprüchen 1 bis 10, dadurch gekennzeichnet, dass die die Umlenkrollen (26, 27) tragenden Arme (28, 29) seitlich an den Längsträgern (16, 23) befestigt sind, und die Lager der Umlenkrollen in Richtung der seitlichen Anordnung der Längsträger auskragen.

12. Gewächshaus nach den Ansprüchen 1 bis 11, dadurch gekennzeichnet, dass ein Antriebsaggregat (38, 39) für das Umlaufband (37) an einem der Längsträger (23) befestigt ist.

## Claims

1. A greenhouse comprising a cage-like supporting structure (1) in which an endless circulating belt (37) guided about upper and lower deflection pulleys (26, 27) for accomodating developing organisms is provided, characterized in that the deflection pulleys (26, 27) are arranged on longitudinal carriers (16, 23) extending over the total length of the greenhouse and supported on the supporting structure (1) in a manner that relative movements of the longitudinal carriers (16, 23) with respect to the supporting structure (1) are possible.

2. A greenhouse according to Claim 1, characterized in that the longitudinal carriers (16) carrying the upper deflection pulleys (26) loosely rest on the cage-like supporting structure (1), and the longitudinal carriers (23) carrying the lower deflection pulleys (27) are mounted on the supporting structure (1) so as to be displaceable or pivotable in the vertical direction.

3. A greenhouse according to one of Claims 1 or 2, characterized in that the longitudinal carriers (23) carrying the lower deflection pulleys (27) with one end each are hinged to the supporting structure (1) and, with their other end, are resiliently mounted relative to the supporting structure in the vertical direction.

4. A greenhouse according to Claim 3, characterized in that the pivotable ends of the longitudinal carriers carrying the lower deflection pulleys are each supported on a console (25) arranged on the supporting structure (1) by means of a spring (25').

5. A greenhouse according to Claims 1 to 4, characterized in that the longitudinal carriers (16) carrying the upper deflection pulleys (26) are secured, by means of connecting elements (21), against lateral displacement, i.e. transverse to the longitudinal direction of the greenhouse.

6. A greenhouse according to Claims 1 to 5, characterized in that the upper and lower deflection pulleys (26, 27) are each rotatably journalled on vertically directed arms (28, 29) fastened to the longitudinal carriers (16, 23), preferably clampable by means of a clamping connection (21), the arms (28) carrying the upper deflection pulleys (26) being directed vertically downwards and the arms (29) carrying the lower deflection pulleys (27) being directed vertically upwards.

7. A greenhouse according to Claims 1 to 6, characterized in that between the upper and lower deflection pulleys (26, 27) further deflection pulleys (33, 34) are arranged, which are fastened to the longitudinal carriers (16) carrying the upper deflection pulleys (26) and by which the circulating belt (37) is movable in the longitudinal direction (5) of the greenhouse upon meander-like deflection in the upper part of the greenhouse and in the opposite direction, also upon meander-like deflection, in the lower part of the greenhouse.

8. A greenhouse according to Claim 7, characterized in that two of the further deflection pulleys (33, 34) are each rotatably journalled on a common carrier (35) connecting the bearings of these deflection pulleys, the carrier (35) being fastened to the longitudinal carrier (16) carrying the upper deflection pulleys (26) by means of a connecting device (36) accommodating tensile forces, such as a tension rod.

9. A greenhouse according to Claims 1 to 8, characterized in that the supporting structure (1) is formed by subsequently arranged U-shaped gates (2, 2', 2'') that are downwardly open, the plane of the gates (2, 2', 2'') being directed transverse to the longitudinal direction (5) of the greenhouse, and wherein at least two of these gates (2', 2) are interconnected by a free wind-bracing (6) and the longitudinal carriers (16) comprising the upper deflection pulleys (26) rest on the upper ends of the gates (2, 2', 2''), and the longitudinal carriers (23) carrying the lower deflection pulleys (27) are provided on the lower ends of the gates.

10. A greenhouse according to Claim 9, characterized in that the U-shaped gates (2, 2', 2''), in addition to the wind-bracing (6), are connected with ledges (14) extending in the longitudinal direction (5) of the greenhouse, the ledges being fastened to the gates by means of connecting means (15) that allow for a relative movement between gates and ledges.

11. A greenhouse according to Claims 1 to 10, characterized in that the arms (28, 29) carrying the deflection pulleys (26, 27) are fastened laterally on the longitudinal carriers (16, 23) and the bearings of the deflection pulleys project in the direction of the lateral arrangement of the longitudinal carriers.

12. A greenhouse according to Claims 1 to 11, characterized in that a driving aggregate (38, 39) for the circulating belt (37) is fastened to one of the longitudinal carriers (23).

## Revendications

1. Serre munie d'une charpente porteuse (1) en forme de cage dans laquelle sont prévus une bande circulante (37) sans fin, guidée sur des poulies de renvoi supérieures et inférieures (26, 27), et destinée à recevoir des organismes qui se développent, caractérisée en ce que les poulies de renvoi (26, 27) sont montées sur des longerons (16, 23) qui s'étendent sur toute la longueur de la serre et qui prennent appui sur la charpente porteuse (1) de manière que les longerons (16, 23) puissent décrire des mouvements relatifs par rapport à la charpente porteuse (1).

2. Serre selon la revendication 1, caractérisée en ce que les longerons (16) qui portent les poulies de renvoi supérieures (26) sont posés sans fixation sur la charpente porteuse (1) en forme de cage et que les longerons (23) qui portent les poulies de renvoi inférieures (27) sont montés sur la charpente porteuse (1) de manière à pouvoir se déplacer en translation ou en oscillation dans la direction verticale.

3. Serre selon l'une des revendications 1 ou 2, caractérisée en ce que les longerons (23) qui portent les poulies de renvoi inférieures (27) sont articulés par une extrémité sur la charpente porteuse (1) et sont suspendus élastiquement, dans la direction verticale, à la charpente porteuse par leur autre extrémité.

4. Serre selon la revendication 3, caractérisée en ce que les extrémités oscillantes des longerons qui portent les poulies de renvoi inférieures prennent appui sur une console (25) fixée à la charpente porteuse (1) au moyen d'un ressort (25').

5. Serre selon les revendications 1 à 4, caractérisée en ce que les longerons (16) qui portent les poulies de renvoi supérieures (26) sont retenus par des éléments d'assemblage (21) qui les empêchent de se déplacer en translation latérale, c'est-à-dire transversalement à la direction longitudinale de la serre.

6. Serre selon les revendications 1 à 5, caractérisée en ce que les poulies de renvoi supérieures et inférieures (26, 27) sont montées rotatives sur des bras (28, 29) orientés verticalement, fixés aux longerons (16, 23) et qui peuvent être bloqués, de préférence au moyen d'un assemblage à serrage (21), les bras (28) qui portent les poulies de renvoi supérieures (26) étant orientés verticalement vers le bas, et les bras (29) qui portent les poulies de renvoi inférieures (27) étant orientés verticalement vers le haut.

7. Serre selon les revendications 1 à 6, caractérisée en ce qu'entre les poulies de renvoi supérieures et inférieures (26, 27) sont disposées des poulies de renvoi supplémentaires (33, 34), qui sont fixées aux longerons (16) qui portent les poulies de renvoi supérieures (26), de sorte que la bande circulante (37) peut défiler dans la partie supérieure de la serre, dans la direction longitudinale (5) de la serre, en subissant des changements de direction en formant des méandres, et peut défiler dans la partie inférieure de la serre, dans le sens opposé, également en subissant des changements de direction en formant des méandres.

8. Serre selon la revendication 7, caractérisée en ce que deux des poulies de renvoi supplémentaires (33, 34) sont montées rotatives sur un support commun (35) qui relie les paliers de ces poulies de renvoi, le support (35) étant fixé au longeron (16) qui porte les poulies de renvoi supérieures (26) au moyen d'un élément de liaison (36) tel qu'un tirant, qui supporte les efforts de traction.

9. Serre selon les revendications 1 à 8, caractérisée en ce que la charpente porteuse (1) est formée de portiques (2, 2', 2'') en forme de U, ouverts vers le bas, disposés les uns à la suite des autres, le plan des portiques (2, 2', 2'') étant orienté transversalement à la direction longitudinale (5) de la serre, au moins deux de ces portiques (2', 2) étant reliés l'un à l'autre par un contreventement libre (6), les longerons (16) qui présentent les poulies de renvoi supérieures (26) étant montés sur les parties supérieures des portiques (2, 2', 2'') et les longerons (23) qui portent les poulies de renvoi inférieures (27) étant prévus aux extrémités inférieures des portiques.

10. Serre selon la revendication 9, caractérisée en ce que les portiques en U (2, 2', 2'') sont reliés, en supplément du contreventement (6), à des barres (14) qui s'étendent dans la direction longitudinale (5) de la serre, les barres étant fixées aux portiques à l'aide de moyens d'assemblage (15) qui admettent un déplacement relatif entre les portiques et les barres.

11. Serre selon les revendications 1 à 10, caractérisée en ce que les bras (28, 29) qui portent les poulies de renvoi (26, 27) sont fixés latéralement aux longerons (16, 23), et les paliers des poulies de renvoi font saillies en porte à faux parallèlement à la disposition latérale des longerons.

12. Serre selon les revendications 1 à 11, caractérisée en ce qu'un groupe d'entraînement (38, 39) pour la bande circulante (37) est fixé à l'un des longerons (23).

FIG.1

# FIG. 2

FIG. 3

FIG. 4